# NEUE EUROPÄISCHE PATENTSCHRIFT

(11) **EP 1 901 043 B2**
(45) Veröffentlichungstag und Bekanntmachung des Hinweises auf die Entscheidung über den Einspruch: **03.09.2014**
(45) Hinweis auf die Patenterteilung: 13.10.2010
(21) Anmeldenummer: 07016886.9
(22) Anmeldetag: 29.08.2007
(51) Int. Cl.: G01F 15/18

(54) **Zählergehäuse zum Einsetzen in eine Rohrleitung**
Meter casing for fitting into a conduit
Boîtier de compteur pour l'installation dans une conduite

(30) Priorität: 14.09.2006 DE 102006043937
(43) Veröffentlichungstag der Anmeldung: 19.03.2008
(73) Patentinhaber: Hydrometer GmbH, 91522 Ansbach (DE)
(72) Erfinder: Zellner, Claus, 91522 Ansbach (DE); Carl, Joachim, 90547 Stein (DE)
(74) Vertreter: Blaumeier, Jörg

(56) Entgegenhaltungen:
- WO-A1-99//52333
- DE-A1- 2 455 918
- DE-A1- 4 121 056
- DE-A1- 4 121 056
- DE-A1- 10 003 343
- DE-U- 1 991 825
- GB-A- 1 246 055
- US- - 1 949 829
- 'Naturwissenschaften und Technik', 1989, BROCKHAUSVERLAG, MANNHEIM Seiten 45 - 32
- W. DIGEL ET AL.: 'Meyers Großes Taschenlexikon', 1981, BIBLIOGRAPHISCHES INSTITUT, MANNHEIM

## Beschreibung

Die Erfindung betrifft ein Zählergehäuse zum Einsetzen in eine Rohrleitung, insbesondere ein Wasserzählergehäuse, mit einem Gehäusekorpus und zwei mit der Rohrleitung zu verbindenen Anschlussstutzen, wobei das Zählergehäuse vorzugsweise aus Kunststoff besteht.

Solche Zählergehäuse kommen bei verschiedenen Arten von Zählern zum Einsatz, als prominentestes Beispiel ist ein Wasserzähler zu nennen, bekannt sind aber auch Gaszähler oder Wärme- oder Energiezähler. Um die Zähl- oder Messaufgabe erfüllen zu können, ist es erforderlich, das Zählergehäuse des jeweiligen Zählers in eine Rohrleitung einzusetzen, in der das zu erfassende Medium, beispielsweise Wasser strömt. Zu diesem Zweck weist das Zählergehäuse zwei Anschlussstutzen auf, die üblicherweise mit Schraubgewinden versehen sind, sodass sie über eine Schraubverbindung dicht mit dem anschließenden Rohrende verbunden werden können. Bekannte Zählergehäuse sind üblicherweise aus Metall, es ist aber auch bekannt, Zählergehäuse aus Kunststoff herzustellen.

Üblicherweise sind die Anschlussstutzen axial fluchtend zueinander angeordnet, was es bedingt, dass für eine spannungsfreie Verbindung mit den Rohrleitungsenden auch diese axial miteinander fluchtend positioniert sind. Ist dies nicht der Fall, ist also ein Fluchtungsfehler gegeben, so ergibt sich nach Befestigen des Zählergehäuses mit dem einen Anschlussstutzen am einen Rohrleitungsende ein gewisser Versatz des anderen Anschlussstutzen zum anderen Rohrleitungsende. Zumeist gelingt es dennoch, trotz dieses Versatzes den zweiten Anschlussstutzen mit dem Rohrende zu verbinden, jedoch ist diese Verbindung nicht spannungsfrei, infolge des Versatzes lasten auf der Verbindung Axial- und/oder Quer- bzw. Scherkräfte. Dies kann dazu führen, dass die Verbindung im Lauf der Zeit beeinträchtigt wird, oder dass sich insbesondere bei Verwendung eines Kunststoffgehäuses das Gehäuse selbst im Lauf der Zeit etwas verformt bzw. auch undicht wird.

Um einen etwaigen Fluchtungsfehler ausgleichen zu können, ist aus DE 299 20 282 U1 ein Zählergehäuse bekannt, bei dem wenigstens ein Anschlussstutzen in das Kunststoffgehäuse zwar flüssigkeitsdicht, ansonsten aber lose eingeschoben ist. Das heißt, dieser Anschlussstutzen kann, je nach den konstruktiven Gegebenheiten, mehr oder weniger tief in die Stutzenöffnung eingeschoben bzw. aus dieser herausgezogen werden. Spannungen werden dabei auf das Gehäuse nicht übertragen.

Zwar lässt das aus DE 299 20 282 U1 bekannte Zählergehäuse den Ausgleich von Fluchtungsfehlern in gewissem Maße zu, gleichwohl ist die dort beschriebene Anordnung nachteilig. Denn es sind besondere Vorkehrungen zu treffen, damit der axial bewegliche Stutzen auch tatsächlich flüssigkeitsdicht in der Stutzenöffnung aufgenommen ist. Hierfür sind jeweils separate O-Ring-Dichtungen vorgesehen, die weiterhin im Einsatz auch beschädigt werden können.

Der Erfindung liegt damit das Problem zugrunde, ein einfacher aufgebautes Zählergehäuse anzugeben, das auch größere Fluchtungsfehler bzw. axiale Abstandsfehler ausgleichen kann.

Zur Lösung dieses Problems ist ein Zählergehäuse gemäß Patentanspruch 1 vorgesehen.

Bei dem erfindungsgemäßen Zählergehäuse ist mit besonderem Vorteil wenigstens ein Anschlussstutzen mit dem Gehäusekörper, der einen entsprechenden Befestigungsabschnitt aufweist, über einen elastischen Verbindungsabschnitt verbunden. Dieser elastische Verbindungsabschnitt ermöglicht nun sowohl eine axiale Bewegung des Anschlussstutzens relativ zum Gehäusekörper als auch eine Querbewegung. Der Verbindungsabschnitt ist also in der Lage, Axialkräfte wie auch Quer- oder Scherkräfte, die aus der Position des zu verbindenden Rohrleitungsendes und des Anschlussstutzens resultieren, aufzunehmen und zu kompensieren. Die Kräfte bzw. Spannungen werden also über den elastischen Verbindungsabschnitt gedämpft bzw. vernichtet, wirken sich also nicht auf die Verbindung zwischen dem Zählergehäuse und der Rohrleitung bzw. auf das Zählergehäuse selbst aus. Dies ermöglicht es, auch Zählergehäuse aus Kunststoff mit starren Rohrleitungen zu koppeln, da der erfindungsgemäß vorgesehene elastische Verbindungsabschnitt entsprechende axiale oder radiale Differenzen ausgleicht. Das zu erfassende Medium strömt von der Rohrleitung durch den Anschlussstutzen und den selbstverständlich die Anschlussstutzenbohrung fortsetzenden elastischen Verbindungsabschnitt in den Befestigungsabschnitt und damit in den Gehäusekörper ein.

Anders als im oben beschriebenen Stand der Technik ist hier keine bewegliche Lagerung des Anschlussstutzens im Gehäusekörper unter zwingender Zwischenschaltung eines separaten Dichtelements vorgesehen. Vielmehr bildet der erfindungsgemäß vorgesehene elastische Verbindungsabschnitt einen Zwischenabschnitt zwischen dem Anschlussstutzen und dem Gehäusekörper, er ist fest und flüssigkeitsdicht mit dem Anschlussstutzen wie auch dem Gehäusekörper verbunden. Zusätzliche Dichtelemente oder dergleichen sind infolge der dichten Verbindung nicht erforderlich. Gleichwohl bietet der elastische Verbindungsabschnitt eine sehr beachtliche Relativbeweglichkeit des Anschlussstutzens zum Gehäusekörper sowohl in axialer Richtung als auch in Querrichtung. Der Aufbau des Zählergehäuses ist sehr einfach und bedarf keiner zusätzlichen Bauteile, insbesondere ist das Zählergehäuse imstande, auch große Fluchtungs- oder Baudifferenzen ohne weiteres ausgleichen zu können.

Der elastische Verbindungsabschnitt ist zweckmäßigerweise mittels eines mit dem Anschlussstutzen und dem Gehäusekörper flüssigkeitsdicht verbundenen Polymerabschnitts gebildet. Das Polymer sollte hinreichende elastische Eigenschaften aufweisen und insbesondere bei einer Ausbildung des Zählergehäuses zum Einsatz bei einem Wasserzähler auch lebensmittelunbedenklich sein. Bevorzugt wird der Polymerabschnitt aus einem Silikonkautschuk, einem Elastomer oder einem thermoplastischen Elastomer gebildet. Vorzugsweise sind diese Werkstoffe im Verarbeitungszustand flüssig oder zähflüssig, sodass sie beispielsweise in einem Spritzverfahren um die entsprechenden Bereiche am Anschlussstutzen wie auch am Gehäusekörper gespritzt werden können und infolge ihres flüssigen oder zähflüssigen Zustands eine dichte Verbindung mit dem Anschlussstutzen bzw. dem Gehäusekörper eingehen können, wie auch alle auszuspritzenden Bereiche bzw. Hohlräume ausgefüllt werden können. Insgesamt ergibt sich also eine form-und/oder stoffschlüssige, in einem Spritzverfahren herstellbare Verbindung zwischen dem elastischen Verbindungsabschnitt, bevorzugt aus Silikonkautschuk, und dem Anschlussstutzen und dem Gehäusekörper.

Zur Verbesserung der Haftfestigkeit durch Vergrößerung der Haftfläche, also der Benetzungsfläche bzw. der Verbindungsfläche sind zweckmäßigerweise am Anschlussstutzen und am Gehäusekörper Hinterschneidungen, in die der elastische Verbindungsabschnitt eingreift, vorgesehen. Diese Hinterschneidungen können beispielsweise als umlaufende Nuten ausgebildet sein, sie können aber auch als mäanderförmige geführte, umlaufende Nuten ausgebildet sein. Auch andere Profilierungen am Anschlussstutzen und am Gehäusekörper im Verbindungsbereich sind denkbar, beispielsweise eine erzeugte Oberflächenrauhigkeit oder ein Rillen-oder Eintiefungsprofil etc.

Nachdem bei dem erfindungsgemäßen Zählergehäuse der elastische Verbindungsabschnitt nicht nur der beweglichen Verbindung des Anschlussstutzens mit dem Gehäusekörper dient, sondern auch der Führung des zu erfassenden Mediums, ist er, da elastisch und damit weich, vor Beschädigungen zu schützen. Zu diesem Zweck ist bevorzugt eine den elastischen Verbindungsabschnitt innen-und/oder außenseitig umgebende Schutzabdeckung vorgesehen, beispielsweise in Form einer Manschette oder dergleichen, die selbstverständlich so ausgelegt bzw. angeordnet und befestigt ist, dass sie die elastische Bewegbarkeit des Verbindungsabschnitts und damit die Relativbeweglichkeit des Anschlussstutzens zum Gehäusekörper nicht beeinträchtigt. Ein solcher Schutz ist aber nicht unbedingt vorzusehen.

Neben dem Zählergehäuse selbst betrifft die Erfindung ferner einen Zähler, insbesondere einen Wasserzähler, umfassend ein Zählergehäuse der beschriebenen Art. Bei einem fertigen Zähler ist in das Zählergehäuse üblicherweise eine Messkapsel eingesetzt, die das entsprechende Zählwerk bzw. die entsprechende Erfassungselektronik etc. aufweist.

Weiterhin betrifft die Erfindung ein Verfahren zur Herstellung eines Zählers der beschriebenen Art, das sich dadurch auszeichnet, dass ein Anschlussstutzen und ein Gehäusekörper, die beide bevorzugt ebenfalls aus Kunststoff bestehen, in einem beliebigen Spritz- oder Gießverfahren unter Verwendung eines flüssigen oder zähflüssigen Polymers unter Ausbildung eines elastischen Verbindungsabschnitts miteinander verbunden werden. Als Polymer wird bevorzugt ein Silikonkautschuk, ein Elastomer oder ein thermoplastisches Elastomer verwendet, also Werkstoffe, die während des Erkaltens vernetzen und im Endzustand eine hinreichende Elastizität besitzen.

In Weiterbildung des erfindungsgemäßen Verfahrens kann vorgesehen sein, die von dem Polymer zu benetzenden Flächen am Anschlussstutzen und am Gehäusekörper, die bei dieser Erfindungsausgestaltung beide aus Kunststoff bestehen, vor dem Spritzen z. B. einer Plasma-Oberflächenbehandlung oder einer Ethanol-Reinigung zu unterziehen. Diese Vorbehandlung der zu umspritzenden Bereiche z.B. mit Atmosphärendruck-Plasma (z.B. Corona oder ähnliches) oder Ethanol steigert die Oberflächenenergie im Bereich der behandelten Oberflächen und somit die Haftfähigkeit des umspritzten Polymers. Nach Durchführung z.B. dieser Plasma-Oberflächenbehandlung werden die Einzelteile, also der Anschlussstutzen und das Zählergehäuse, in eine geeignete Form gebracht und in einem anschließenden Vorgang mit dem eingespritzten oder eingegossenen Polymer unter Ausbildung des elastischen Verbindungsabschnitts verbunden. Zweckmäßigerweise erfolgt anschließend eine Temperung des Zählergehäuses, um die Vernetzung des Polymers zu beschleunigen.

An dieser Stelle ist festzuhalten, dass selbstverständlich die Möglichkeit besteht, beide Anschlussstutzen über einen elastischen Verbindungsabschnitt in der erfindungsgemäßen Weise mit dem Gehäusekörper zu verbinden. Etwaige Fluchtungsfehler werden damit über die beiden Verbindungsabschnitte, jeweils unter Aufnahme entsprechend reduzierter Spannungen, ausgeglichen. Gleichwohl ist grundsätzlich die Verbindung nur eines Anschlussstutzens in der erfindungsgemäßen Weise bereits ausreichend.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Perspektivansicht eines erfindungsgemäßen Zählergehäuses, und
- Fig. 2: eine Teilansicht des Zählergehäuses aus Fig. 1 im Verbindungsbereich zwischen Anschlussstutzen und Gehäusekörper im Schnitt.

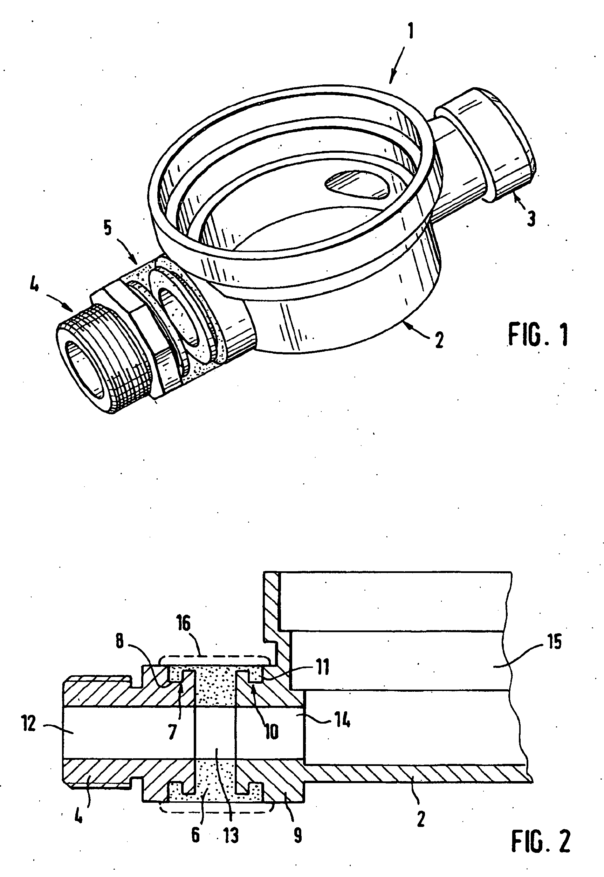

Fig. 1 zeigt ein erfindungsgemäßes Zählergehäuse 1, umfassend den zentralen Gehäusekörper 2, der aus Kunststoff gefertigt ist. An ihm ist ein erster Anschlussstutzen 3, ebenfalls aus Kunststoff, unmittelbar einstückig angeformt. An der gegenüberliegenden Gehäusekörperseite ist ein zweiter Anschlussstutzen 4 vorgesehen, der mit dem Gehäusekörper 2 über einen elastischen Verbindungsabschnitt 5 verbunden ist. Dieser elastische Verbindungsabschnitt 5 ist ein Polymerabschnitt 6, bevorzugt hergestellt aus einem flüssig verarbeitbarem Silikonkautschuk, der beim Abkühlen vernetzt und aushärtet, jedoch im ausgehärteten Zustand elastisch ist.

Wie in der Schnittansicht gemäß Fig. 2 gezeigt, ist am Anschlussstutzen 4 ein umlaufender Befestigungsabschnitt 7 vorgesehen, umfassend eine Hinterschneidung 8. In entsprechender Weise ist auch an dem Verbindungsstutzen 9 des Gehäusekörpers 2 ein Befestigungsabschnitt 10 vorgesehen, ebenfalls umfassend eine Hinterschneidung 11. Zur Herstellung des Zählergehäuses werden der Anschlussstutzen 4 und der Gehäusekörper 2 als separate Bauteile z.B. in eine Spritzgussform eingelegt, wonach das flüssige Polymer, wie beschrieben bevorzugt ein Silikonkautschuk, in den Bereich zwischen den beiden Befestigungsabschnitten 7, 10 gespritzt wird. Das flüssige Polymer fließt dabei, der Spritzgießform folgend, in den Bereich der Befestigungsabschnitte 7, 10 und füllt den gesamten Zwischenraum zwischen Anschlussstutzen 4 und Gehäusekörper 2 aus. Während des Spritzvorgangs wird selbstverständlich sichergestellt, dass der Zu- oder Ablaufkanal 12 im Anschlussstutzen von einem entsprechenden Kanalabschnitt 13 im Verbindungsabschnitt 6 zum Kanalabschnitt 14 im Gehäusekörper 2 fortgeführt wird, wo der Kanal in das Innere 15 des Gehäusekörpers 2 mündet.

Nach Entnehmen aus der Spritzgussform, wenn also das flüssige Polymer ausgehärtet ist, ist ein form- und/oder stoffschlüssiger Verbund des Verbindungsabschnitts 5 sowohl mit dem Anschlussstutzen 4 als auch dem Gehäusekörper 2 realisiert, einerseits über die relativ breiten Befestigungsabschnitte 7, 10, andererseits durch den formschlüssigen Eingriff in die Hinterschneidungen 8, 11. Es ergibt sich eine flüssigkeitsdichte Verbindung des Verbindungsabschnitts 5 zum Anschlussstutzen 4 und zum Gehäusekörper 2, sodass beispielsweise Wasser, das in dem Kanal, gebildet aus den Kanalabschnitten 12, 13, 14, fließt, im Bereich der Verbindung des Verbindungsabschnitts 5 zum Anschlussstutzen 4 und Gehäusekörper 2 nicht austreten kann.

Der Verbindungsabschnitt 5 hat aufgrund seiner elastischen Eigenschaften eine Dämpfungs- und Ausgleichsfunktion. Er ist imstande, Axialkräfte aufzunehmen, das heißt, der Anschlussstutzen 4 ist relativ zum Gehäusekörper 2 axial beweglich. Ist beispielsweise der Abstand des Rohrendes, das mit dem Anschlussstutzen 4 zu koppeln ist, relativ gering, sodass das Zählergehäuse 1 nur unter zwangsläufig gegebenem axialem Druck in die Rohrleitung integriert werden kann, so kann dieser Druck oder die Druckspannung über den elastischen Verbindungsabschnitt 5 gedämpft und kompensiert werden. Der Anschlussstutzen 4 kann unter Deformation des Verbindungsabschnitts 5 ohne der Gefahr eines Verlustes an Dichtigkeit etwas zum Gehäusekörper 2 gedrückt werden, sodass also der Abstand zwischen beiden etwas verkürzt wird, Spannungen werden von dem deformierten Verbindungsabschnitt 5 aufgenommen.

In entsprechender Weise ist der Anschlussstutzen 4 auch um ein gewisses Maß quer zum Gehäusekörper 2 beweglich, bzw. kann relativ zu diesem verkippt werden. Fluchten beispielsweise die Rohrenden der Rohrleitung, in die das Zählergehäuse 1 zu setzen ist, nicht exakt miteinander, so ist es ohne Weiteres möglich, den ersten, unbeweglichen Anschlussstutzen 3 am einen Rohrende zu befestigen. Der zweite Anschlussstutzen 4 liegt aufgrund des seitlichen Fluchtungsfehlers etwas seitlich versetzt zum anderen Rohrende, an dem er anzuschließen ist. Dieser Fluchtungsfehler kann nun durch eine Querbewegung oder Verkippung des über den elastischen Verbindungsabschnitt beweglich gehalterten Anschlussstutzens 4 kompensiert werden. Auch hierbei wird der elastische Verbindungsabschnitt 5 etwas deformiert, was aufgrund seiner elastischen Eigenschaften ohne Weiteres möglich ist, etwaige Spannungen werden abgebaut und nicht auf den aus Kunststoff bestehenden Gehäusekörper 2 übertragen. Die Dichtheit der Verbindung des Verbindungsabschnitts 5 zum Anschlussstutzen 4, der ebenfalls aus Kunststoff besteht, und zum Gehäusekörper 2 bleibt auch hier erhalten.

Infolgedessen ist es mit dem erfindungsgemäßen Zählergehäuse, das keinerlei zusätzliche Bauteile wie separate Dichtringe oder dergleichen benötigt, vorteilhaft möglich, auch beachtliche Fluchtungsfehler oder axiale Baudifferenzen ausgleichen zu können. Selbstverständlich besteht die Möglichkeit, auch den Anschlussstutzen 3 in der erfindungsgemäßen Weise über einen elastischen Verbindungsabschnitt 5 mit dem Gehäusekörper 2 zu verbinden, also auch diesen relativ beweglich zu lagern. Es wären dann zwei elastische Verbindungsabschnitte gegeben, die deformiert werden können, sodass auch beachtlich große Fluchtungsfehler ausgeglichen werden können.

Wie beschrieben besteht der elastische Verbindungsabschnitt 5 aus einem Polymer, wobei hier bevorzugt ein Silikonkautschuk verwendet wird. Denkbar sind aber auch thermoplastische Elastomere, die eine "Zwitterstellung" zwischen reinen Thermoplasten und reinen Elastomeren darstellen. Sie sind wie Thermoplaste verarbeitbar, können also ohne weiteres gespritzt werden und zeigen im Anwendungstemperaturbereich ihre elastischen Eigenschaften wie ein Elastomer. Auch reine Elastomere sind verwendbar, solange sie spritzgegossen werden können. Nachdem in dem erfindungsgemäßen Zählergehäuse, sofern dies Teil eines Wasserzählers ist, üblicherweise auch Trinkwasser geführt wird, sollte das verwendete Polymer für einen Einsatz im Lebensmittelbereich geeignet und zu gelassen sein.

Auf jeden Fall ist der Polymerabschnitt 6 elastisch und damit weich. Nachdem er über seinen Kanalabschnitt 13 den Zu- oder Ablaufkanal mit bildet, ist er vor etwaigen Beschädigungen zu schützen, wozu beispielsweise eine hier nur gestrichelt dargestellte Manschette 16 dienen kann, bei der es sich beispielsweise um einen Kunststoffring handeln kann, der auf den Verbindungsabschnitt 5 aufgeschoben oder um diesen herumgelegt wird. Dieser ist hinreichend mechanisch stabil, behindert jedoch die erfindungsgemäß über den elastischen Verbindungsabschnitt 5 realisierte Relativbewegung des Anschlussstutzens 4 zum Gehäusekörper 6 nicht.

## Patentansprüche

1. Zählergehäuse zum Einsetzen in eine Rohrleitung, insbesondere Wasserzählergehäuse, mit einem Gehäusekörper und zwei mit der Rohrleitung zu verbindenden Anschlussstutzen, wobei das Zählergehäuse vorzugsweise aus Kunststoff besteht, wobei zwischen wenigstens einem Anschlussstutzen (4) und dem Gehäusekörper (2) ein mit diesen fest und flüssigkeitsdicht verbundener elastischer Verbindungsabschnitt (5), der eine Bewegung des Anschlussstutzens (4) relativ zum Gehäusekörper (2) erlaubt, angeordnet ist, wobei der elastische Verbindungsabschnitt (5) mittels eines mit dem Anschlussstutzen (4) und dem Gehäusekörper (2) flüssigkeitsdicht verbundenen Polymerabschnitts (6) gebildet ist, **dadurch gekennzeichnet, dass** das Polymer in einem Spritzverfahren oder einem Gießverfahren formschlüssig um den Anschlussstutzen (4) und den Gehäusekörper (2) gespritzt oder gegossen ist.

2. Zählergehäuse nach Anspruch 1, **dadurch gekennzeichnet, dass** der Polymerabschnitt (6) aus einem Silikonkautschuk, Elastomer oder thermoplastischem Elastomer gebildet ist.

3. Zählergehäuse nach einem der vorangehenden Ansprüche, **dadurch gekennzeichnet, dass** der Anschlussstutzen (4) und der Gehäusekörper (2) im Bereich (7, 10) der Verbindung zum Verbindungsabschnitt (5) oberflächlich profiliert ist, und insbesondere am Anschlussstutzen (4) und am Gehäusekörper (2) Hinterschneidungen (8, 11), in die der elastische Verbindungsabschnitt (5) eingreift, vorgesehen sind.

4. Zählergehäuse nach einem der vorangehenden Ansprüche, **dadurch gekennzeichnet, dass** eine den elastischen Verbindungsabschnitt (5) außen- und/oder innenseitig umgebende Schutzabdeckung (16) vorgesehen ist.

5. Zähler, insbesondere Wasserzähler, umfassend ein Zählergehäuse (1) nach einem der Ansprüche 1 bis 4.

6. Verfahren zur Herstellung eines Zählergehäuses nach einem der Ansprüche 1 bis 4, **dadurch gekennzeichnet, dass** ein Anschlussstutzen (4) und ein Gehäusekörper (2) in einem Spritz- oder Gießverfahren unter Verwen-dung eines flüssigen oder zähflüssigen Polymers unter Ausbildung eines elastischen Verbindungsabschnitts (5) miteinander verbunden werden.

7. Verfahren nach Anspruch 6, **dadurch gekennzeichnet, dass** als Polymer ein Silikonkautschuk, ein Elastomer oder ein thermoplastisches Elastomer verwendet wird.

8. Verfahren nach Anspruch 6 oder 7, **dadurch gekennzeichnet, dass** die von dem Polymer benetzten Bereiche (7, 10) am Anschlussstutzen (4) und am
Gehäusekörper (2), die beide aus Kunststoff bestehen, vor dem Spritzen oder Gießen einer die Haftfestigkeit verbessernden Oberflächenbehandlung, insbesondere einer Plasma-Behandlung unterworfen werden.

9. Verfahren nach einem der Ansprüche 6 bis 8, **dadurch gekennzeichnet, dass** das Zählergehäuse (1) nach dem Spritzen getempert wird.

## Claims

1. A meter housing for fitting into a pipeline, in particular, a water-meter housing, with a housing body and two connecting pipes to be connected to the pipeline, wherein the meter housing is preferably made of synthetic material,
wherein, between at least one connecting pipe (4) and the housing body (2), an elastic connecting portion (5) connected in a rigid and fluid-tight manner to the latter is arranged, which allows a movement of the connecting pipe (4) relative to the housing body (2),
wherein the elastic connecting portion (5) is formed by means of a polymer portion (6) connected in a fluid-tight manner to the connecting pipe (4) and the housing body (2),
**characterised in that**
the polymer is injected or cast around the connecting pipe (4) and the housing body (2) in a form-fit manner in an injection process or a casting process.

2. The meter housing according to claim 1,
**characterised in that**
the polymer portion (6) is formed from a silicone rubber, elastomer or thermoplastic elastomer.

3. The meter housing according to any one of the preceding claims,
**characterised in that**
the connecting pipe (4) and the housing body (2) is surface profiled in the region (7, 10) of the connection to the connecting portion (5), and in particular, undercuts (8, 11), into which the elastic connecting portion (5) engages, are provided on the connecting pipe (4) and on the housing body (2).

4. The meter housing according to any one of the preceding claims,
**characterised in that**
a protective cover (16) surrounding the elastic connecting portion (5) externally and/or internally is provided.

5. A meter, in particular, a water meter, comprising a meter housing (1) according to any one of claims 1 to 4.

6. A method for manufacturing a meter housing according to any one of claims 1 to 4,
**characterised in that**
a connecting pipe (4) and a housing body (2) are connected to one another in an injection or casting process using a liquid or viscous polymer thereby forming an elastic connecting portion (5).

7. The method according to claim 6,
**characterised in that**
as the polymer, a silicone rubber, elastomer or thermoplastic elastomer is used.

8. The method according to claim 6 or 7,
**characterised in that**
the regions (7, 10) wetted with the polymer on the connecting pipe (4) and on the housing body (2), which both are made of synthetic material, are subjected to a surface treatment improving the adhesion, especially a plasma treatment, before the injection or casting.

9. The method according to any one of claims 6 to 8, **characterised in that**
the meter housing (1) is tempered after the injection.

## Revendications

1. Boîtier de compteur destiné à être utilisé dans une canalisation, plus particulièrement un boîtier de compteur d'eau, avec un corps de boîtier et deux manchons de raccordement à relier avec la canalisation, le boîtier du compteur étant constitué de préférence de matière plastique, une portion de raccordement élastique (5) relié avec ceux-ci de manière fixe et étanche aux liquides, qui permet un mouvement du manchon de raccordement (4) par rapport au corps du boîtier (2), se trouvant entre au moins un manchon de raccordement (4) et le corps du boîtier (2), la portion de raccordement élastique (5) étant constituée d'une portion en polymère (6) reliée de manière étanche aux liquides avec le manchon de raccordement (4) et le corps du boîtier (2), **caractérisé en ce que** le polymère est injecté ou coulé dans un procédé d'injection ou de coulée, avec une complémentarité de forme, autour du manchon de raccordement (4) et du corps du boîtier (2).

2. Boîtier de compteur selon la revendication 1, **caractérisé en ce que** la portion en polymère (6) est constituée d'un caoutchouc au silicone, d'un élastomère ou d'un élastomère thermoplastique.

3. Boîtier de compteur selon l'une des revendications précédentes, **caractérisé en ce que** le manchon de raccordement (4) et le corps du boîtier (2) sont profilés en surface au niveau (7, 10) du raccordement avec la portion de raccordement (5) et plus particulièrement sur le manchon de raccordement (4) et le corps du boîtier (2), sont prévues des contre-dépouilles (8, 11) dans lesquelles s'emboîte la portion de raccordement élastique (5).

4. Boîtier de compteur selon l'une des revendications précédentes, **caractérisé en ce qu'**une protection (16) entourant, à l'extérieur et/ou à l'intérieur, la portion de raccordement élastique (5), est prévue.

5. Compteur, plus particulièrement compteur d'eau, comprenant un boîtier de compteur (1) selon l'une des revendications 1 à 4.

6. Procédé de fabrication d'un boîtier de compteur selon l'une des revendications 1 à 4, **caractérisé en ce qu'**un manchon de raccordement (4) et un corps de boîtier (2) sont reliés ensemble selon un procédé d'injection ou de coulée à l'aide d'un polymère liquide ou visqueux en formant une portion de raccordement élastique (5).

7. Procédé selon la revendication 6, **caractérisé en ce que** le polymère utilisé est un caoutchouc au silicone, un élastomère ou un élastomère thermoplastique.

8. Procédé selon la revendication 6 ou 7, **caractérisé en ce que** les zones (7, 10) imprégnées par le polymère sur le manchon de raccordement (4) et sur le corps du boîtier (2), qui sont constitués tous les deux de matière plastique, sont soumises, avant l'injection ou la coulée, à un traitement de surface, plus particulièrement un traitement au plasma, améliorant l'adhérence.

9. Procédé selon l'une des revendications 6 à 8, **caractérisé en ce que** le boîtier du compteur (1) est recuit après l'injection.
